# EUROPÄISCHE PATENTSCHRIFT

(11) **EP 2 954 534 B1**
(45) Veröffentlichungstag und Bekanntmachung des Hinweises auf die Patenterteilung: **29.03.2017**
(21) Anmeldenummer: 14705055.3
(22) Anmeldetag: 30.01.2014
(51) Int. Cl.: G21D 3/00, G05B 23/02, G06F 21/56, G06F 21/57, G05B 19/05, G06F 21/55

(54) **VORRICHTUNG UND VERFAHREN ZUR ERKENNUNG VON UNBEFUGTEN MANIPULATIONEN DES SYSTEMZUSTANDES EINER STEUER- UND REGELEINHEIT EINER KERNTECHNISCHEN ANLAGE**
DEVICE AND METHOD FOR DETECTING UNAUTHORISED MANIPULATIONS OF THE SYSTEM STATE OF AN OPEN-LOOP AND CLOSED-LOOP CONTROL UNIT OF A NUCLEAR PLANT
DISPOSITIF ET PROCÉDÉ DE DÉTECTION DE MANIPULATIONS NON AUTORISÉE DE L'ÉTAT DU SYSTÈME D'UNE UNITÉ DE COMMANDE ET DE RÉGULATION D'UNE INSTALLATION NUCLÉAIRE

(30) Priorität: 06.02.2013 DE 102013201937
(43) Veröffentlichungstag der Anmeldung: 16.12.2015
(73) Patentinhaber: AREVA GmbH, 91052 Erlangen (DE)
(72) Erfinder: HALBIG, Siegfried, 91088 Bubenreuth (DE)
(74) Vertreter: Harbach, Ulrich
(86) Internationale Anmeldenummer: PCT/EP2014/051837
(87) Internationale Veröffentlichungsnummer: WO 2014/122063

(56) Entgegenhaltungen:
- WO-A1-2009/128905
- JP-A- H09 211 186
- JP-A- 2012 013 581
- JP-A- 2012 113 731

## Beschreibung

Die Erfindung betrifft eine Vorrichtung und ein Verfahren zur Erkennung von unbefugten Manipulationen des Systemzustandes einer Steuer- und Regeleinheit, insbesondere einer speicherprogrammierbaren Steuerung einer kerntechnischen Anlage. Sie betrifft weiterhin eine speicherprogrammierbare Steuerung, eine digitale Überwachungsanlage für eine kerntechnische Anlage sowie eine entsprechende kerntechnische Anlage.

In kerntechnischen Anlagen wie beispielsweise Anlagen zur Energieerzeugung (Kernkraftwerken) läuft parallel eine Vielzahl von zusammen wirkenden Prozessen ab, die gewöhnlich Steuer- und Regelvorgänge umfassen. Für die jeweiligen Prozesse werden dabei für die Anwendung optimierte und konfigurierte Steuer- und Regeleinheiten eingesetzt.

Durch die zunehmende datentechnische Vernetzung auch von kerntechnischen Anlagen, insbesondere auch von Anlagen zur Energieerzeugung, und ihre Anbindung an externe Netze bis hin zu dem Internet, werden diese Anlagen gegenüber Angriffen mit Hilfe von Viren oder anderer Schadsoftware anfällig. Ein bekannter Fall, in dem eine derartige Anlage mit einem Software-Virus angegriffen wurde, war STUXNET. Ein solcher Angriff kann zu Produktionseinbußen bis hin zu dem Totalausfall von Anlagen führen und hohe personelle und wirtschaftliche Schäden verursachen. Zudem kann eine derart eingeschleuste Schadsoftware zur Betriebsspionage eingesetzt werden. Darüber hinaus besteht bei einem erstmaligen Angriff durch einen Virus die Gefahr der Verbreitung des Virus, so dass dieser weitere Steuereinrichtungen derselben kerntechnischen Anlage oder auch Steuereinrichtungen damit vernetzter Anlagen angreifen kann. Aufgrund dieser Gefahren kann die Verwendung von Steuersystemen, deren Speicherkonfiguration prinzipiell zur Laufzeit durch Schadsoftware modifiziert werden kann, in vernetzten Umgebungen ein hohes Sicherheitsrisiko darstellen. Derartige Steuersysteme sind speicherprogrammierbare Steuerungen (SPS).

Dokument WO 2009/128905 A1 offenbart eine Vorrichtung zur Erkennung von unbefugten Manipulationen des Systemzustandes einer Steuer- und Regeleinheit einer kerntechnischen Anlage und beinhaltet die Überwachung von speicherprogrammierbaren Steuerungen.

Der Erfindung liegt daher die Aufgabe zu Grunde, eine Vorrichtung bereitzustellen, mit der unbefugte Manipulationen auf zuverlässige Weise detektiert werden können. Weiterhin sollen eine speicherprogrammierbare Steuerung und eine digitale Überwachungsanlage, sowie eine kerntechnische Anlage mit einer solchen Überwachungsanlage bereitgestellt werden.

Diese Aufgabe wird erfindungsgemäß durch eine Vorrichtung nach Anspruch 1 gelöst.

Vorteilhafte Ausgestaltungen der Erfindung sind Gegenstand der Unteransprüche. Die Erfindung geht von der Überlegung aus, dass Angriffe durch Viren oder ähnliche Schadsoftware dann Erfolg haben, wenn Sie den Systemzustand von Steuer-und/oder Regelsystemen derart beeinflussen können, dass ihre Funktionalität in ungewollter Weise verändert, erweitert oder zerstört wird. Dies kann dadurch erfolgen, dass ein schädliches Programm und/oder schädliche Daten in einen während des Betriebes schreibbaren Speicher geladen und ausgeführt werden. Aus diesem Grund erscheint es zunächst problematisch, in sicherheitskritischen Anlagen derartige Steuer- und/oder Regelsysteme einzusetzen. Bei kerntechnischen Anlagen wird die Erfüllung höchster Sicherheitsstandards gefordert, da Veränderungen der Steuersysteme zu Spionage, Ausfall von Komponenten, Fehlfunktionen und schweren Unfällen führen kann.

Bei einem derartigen Angriff würde z. B. versucht werden, in die Steuer- und Regeleinheit zusätzlichen Programmcode einzuschleusen bzw. vorhandenen Programmcode durch infizierten Code zu ersetzen. Weiterhin könnte versucht werden, eine Konfiguration derart zu verändern, dass Daten von Sensoren nicht mehr empfangen und/oder Aktoren nicht mehr angesprochen bzw. angesteuert werden können.

Wie nunmehr erkannt wurde, lassen sich die geforderten hohen Sicherheitsstandards verwirklichen, indem die systeminternen Vorgänge einer in einer derartigen Anlage verwendeten Steuer- und Regeleinheit, mit anderen Worten also der Betriebszustand und/oder der Hardwareausbauzustand und/oder der Programmzustand der Steuer- und Regeleinheit überwacht wird und Veränderungen gemeldet werden.

Durch die Erzeugung einer Meldung kann unmittelbar untersucht werden, welcher Art die Veränderung ist und ob sie gegebenenfalls unbefugt erfolgte. Zudem wird ermöglicht, direkt auf diese Veränderung zu reagieren. Im Rahmen der Anmeldung wird mit Steuer- und Regeleinheit jede elektronische Einheit bezeichnet, welche nur Steuerungsvorgänge oder Regelvorgänge oder auch beide Arten von Vorgängen durchführen kann.

Bevorzugt weist die Steuer- und Regeleinheit wenigstens einen schreibbaren Speicher mit darin abgelegten Daten auf, wobei das Überwachungsmodul bei Änderungen der im Speicher abgelegten Daten eine Meldung generiert. Der Betriebszustand, der Hardwareausbauzustand und der Programmzustand einer Steuer- und Regeleinheit mit einem schreibbarem Speicher wie einer speicherprogrammierbaren Steuerung werden im Wesentlichen durch ihren Speicherinhalt bestimmt. Der Speicherinhalt umfasst dabei gewöhnlich den Programmcode, die hardware- und softwaremäßige Konfiguration und dynamisch angelegte Datenfelder, Variablen etc. Ein feindlicher Angriff von außen durch Schadsoftware wird sich in Änderungen des Speichers bemerkbar machen, so dass Änderungen des Speicherinhaltes auf unbefugte Manipulationen hindeuten kann.

Vorteilhafterweise umfassen die Daten den Programmcode oder daraus erzeugte Programmgrößen. Der Programmcode, insbesondere ein ladbares Anwenderprogramm, wird während des Betriebes zur Laufzeit ausgeführt und beinhaltet die Anweisungen, die durchgeführt werden. Änderungen des Programmcodes deuten auf Manipulationen hin. Um derartige Manipulationen zu erkennen, muss aber nicht notwendigerweise der Code direkt auf Änderungen überwacht werden. Effektiver und ökonomischer ist es hierbei, wenn davon abgeleitete oder mit Hilfe des Programmcodes (Anwendercode, Firmware, Betriebssystem etc.) erzeugte, also gewissermaßen sekundäre, Programmgrößen auf Änderungen überwacht werden, sofern deren bei Änderungen des Codes auch mit hinreichend großer Wahrscheinlichkeit Änderungen dieser Größen auftreten. Dies ist beispielsweise der Fall bei aus dem Code bzw. Codeabschnitten oder Codebestandteilen erzeugten Prüfsummen oder Längen. Die CPU weist dabei vorteilhafterweise die "Exklusiv-Oder-Verknüpfung über die Prüfsummen der Softwarebausteine bzw. Module" als interne Funktionalität auf. Die Ergebnisse (beispielsweise 32 Bit Werte) werden dann von dem Überwachungsmodul ausgelesen und auf Änderungen überwacht. Speicherprogrammierbare Steuerungen wie die SIMATIC S7-300 und die SIMATIC S7-400 erzeugen von sich automatisch Prüfsummen, insbesondere Quersummen. Diese müssen von dem Überwachungsmodul nur ausgelesen und auf Änderungen überwacht werden. Durch einen Alt-/Neuwertvergleich kann somit jede Programmänderung erkannt werden.

Die Daten umfassen vorteilhafterweise die Systemdaten, insbesondere die Hardwarekonfiguration, und/oder daraus erzeugte Systemgrößen. Die Hardwarekonfiguration umfasst dabei in modularen Systemen Daten zu den verwendeten Baugruppen. Die Projektierung der Hardwarekonfiguration erfolgt beispielsweise bei der SIMATIC über die in der Programmiersoftware STEP7/PCS7 enthaltene HWKonfig. Jede Baugruppe, die in eine modularen S7-300 oder S7-400 gesteckt werden soll, muss, um lauffähig zu sein, in der HWKonfig parametriert werden und anschließend auf die CPU der Zielstation geladen werden. In der HWKonfig werden alle Einstellungen wie Baugruppenadresse, Diagnoseeinstellungen, Messbereichseinstellungen etc. der jeweiligen Baugruppe parametriert. Dadurch können Einstellungen über z.B. Brückenschalter etc. entfallen. Im Falle eines Baugruppentausches sind keine weiteren Einstellungen mehr notwendig.

Die genannte Projektierung wird in den sogenannten Systemdaten abgelegt. Eine Überprüfung auf Änderungen dieser Systemdaten erlaubt das Detektieren von möglichen Angriffen. Wie oben beschrieben werden auch Exklusiv-Oder-Verknüpfungen über die Prüfsummen von der Steuer- und Regeleinheit bereitgestellt, vom Überwachungsmodul ausgelesen und durch Alt-/Neuwertvergleich auf Änderung überwacht werden.

In einer bevorzugten Ausführungsform überwacht das Überwachungsmodul die Stellung eines Betriebsartenschalters der CPU der Steuer- und Regeleinheit. Ein derartiger Betriebsartenschalter kann mehrere Einstellungen aufweisen. Diese können beispielsweise sein:
- MRES (Rücksetzen vom Variablenspeicher)
- STOP (keine Programmbearbeitung, nur Kommunikation möglich)
- RUN (Programmbearbeitung mit gesperrter Programmänderungsmöglichkeit)
- RUN-P (Programmbearbeitung mit Programmänderungsmöglichkeit).

Bei vielen aktuellen CPU ohne Schlüsselschalter existieren nur noch die Schalterstellungen "START" und "STOP", wobei in der Stellung "STOP" keine Programmbearbeitung möglich ist, so dass in diesem Fall eine programmtechnische Auswertung in der CPU keine Änderung bringt.

Es kann weiterhin vorgesehen sein, dass das Überwachungsmodul Änderungen einer Sicherheitsstufe der Steuer- und Regeleinheit überwacht. Die Sicherheitsstufe kann beispielsweise die Stellungen "Nur Lesen" oder "Lesen und Schreiben", jeweils kombiniert mit Passwortschutz, aufweisen.

Bei während der Überwachung festgestellten Änderungen des Betriebszustandes, der Hardwareausbauzustandes oder des Programms wird eine Meldung generiert, was auf unterschiedliche Art und Weise geschehen kann. Damit die Meldung zu späteren Zeitpunkten für Auswertungen verfügbar ist, wird sie vorteilhafterweise in einen Speicher, insbesondere einen Diagnosepuffer der CPU der Steuer- und Regeleinheit und/oder einen Überwachungspuffer des Überwachungsmoduls geschrieben. Ein Diagnosepuffer kann beispielsweise als ein in einer CPU integrierter Speicherbereich, der als Ringpuffer Diagnoseeinträge aufnehmen kann, ausgeführt sein. Diese Einträge werden vorzugsweise mit einem Datum / Uhrzeitstempel versehen. Vorzugsweise weist das Überwachungsmodul einen Überwachungsspeicher auf, in den die Meldung, bevorzugt mit einem Stempel für Datum und Uhrzeit, geschrieben werden kann. Dieser Überwachungsspeicher kann beispielsweise als Ringpuffer ausgeführt sein. Ein Eintrag der Meldung kann nur in einen der beiden Speicher oder zur Herstellung von Redundanz in beide Speicher, sofern vorhanden, geschrieben werden.

Alternativ dazu oder bevorzugt zusätzlich dazu wird die Meldung an einem, insbesondere binären, Ausgang der Vorrichtung, insbesondere des Überwachungsmoduls, bereitgestellt. Dadurch steht sie dem Projekteur für eine anlagenspezifische Meldungsausgabe zur Verfügung. Dabei sind vorteilhafterweise mehrere Ausgänge vorgesehen, die den einzelnen Arten der detektierten Änderung (Programmspeicher, Systemdatenspeicher, Sicherheitsstufe, etc.) zugeordnet sind. Bevorzugt ist ein Sicherheitsmodul vorgesehen, welches eine Sicherheitsstufe der Steuer- und Regeleinheit bedarfsweise, insbesondere bei Betätigung eines Schlüsselschalters, umschaltet. Die Sicherheitsstufe weist dabei insbesondere die Stellungen "Lesen und Schreiben" und "nur Lesen" und "Schreib- und Leseschutz" auf, wobei diese Stellungen alternativ mit einer Passwort-Legitimierung verknüpft sein können. Ein Schlüsselschalter, über den diese Umschaltung erfolgen kann, ist dann beispielsweise im Schaltschrank eingebaut. So kann sichergestellt werden, dass Programmänderungen nur von autorisierten Personen durchgeführt werden. Ohne die Umstellung bzw. Betätigung des Schlüsselschalters sind dann Programmänderungen gewissermaßen verriegelt und somit ausgeschlossen. Der Schlüsselschalter wird auf einen beliebigen digitalen Eingang verdrahtet. Im Steuerungsprogramm wird dieses Signal auf einen Baustein (SecLev_2) verschaltet, welcher dann über eine Systemfunktion den Security Level einstellt.

Erfindungsgemäß ist ein Kontrollmodul vorgesehen, welches den Betrieb des Überwachungsmoduls überwacht, wobei auch das Überwachungsmodul den Betrieb des Kontrollmoduls überwacht. Die dieser Ausgestaltung zugrunde liegende Überlegung ist die folgende: Damit ein Angreifer eine unerkannte Programmänderung in der Steuer- und Regeleinheit durchführen kann, muss er zunächst einen Schreibzugriff erhalten durch Stellung der Sicherheitsstufe auf "Lesen und Schreiben". Zusätzlich dazu muss er die Aktivität des Überwachungsmoduls unterbinden, d.h. er muss bei einer Realisation des Überwachungsmoduls durch ein Softwaremodul bzw. durch einen Softwarebaustein dessen Bearbeitung bzw. die Bearbeitung seiner Programmanweisungen seitens der CPU unterbinden. Um letzteres zu erkennen bzw. abzufangen ist das Kontrollmodul vorgesehen.

Das Überwachungsmodul und das Kontrollmodul überwachen gegenseitig ihren Betrieb. Es liegt hier also nicht eine einfache redundante Überwachung der Steuer- und Regeleinheit vor. Erfindungsgemäß sind das Überwachungsmodul und das Kontrollmodul als Softwarebausteine realisiert, wobei beide Module vielmehr gegenseitig ihre Abarbeitung überwachen. Dies geschieht vorteilhafterweise dadurch, dass überprüft wird, ob während einer vorgegebenen Zeitspanne, z.B. einer Sekunde, eine korrekte Abarbeitung des jeweils überwachten Moduls vorliegt. Ist dies nicht der Fall, wird die fehlende Abarbeitung gemeldet, was auf den Versuch einer oder auf eine bereits erfolgte Kompromittierung hindeuten kann. Eine Löschung von Softwarebausteinen von außen durch einen Angriff ist nur nacheinander möglich. Das heißt, der Angreifer wird, sofern er denn überhaupt Kenntnis von der Existenz der beiden Module und deren Funktionalitäten erlangen konnte, diese nacheinander löschen oder deaktivieren müssen. Bei einer Löschung oder Deaktivierung eines der beiden Module wird dies aber durch das jeweils andere Modul erkannt und eine entsprechende Meldung wird erzeugt, so dass der Ausfall eines der beiden Module zuverlässig erkannt wird.

In dem Fall, dass das Kontrollmodul Irregularitäten im Betrieb des Überwachungsmoduls feststellt, zeigt es den fehlerhaften Betrieb bzw. die fehlerhafte Abarbeitung des Überwachungsmoduls vorteilhafterweise an einem binären Ausgang an. Das Überwachungsmodul zeigt Irregularitäten des Betriebes des Kontrollmoduls auf wenigstens einen der oben beschriebenen Wege an: Eine Meldung wird in einen Speicher bzw. Puffer der CPU oder Überwachungsmoduls, bevorzugt zusammen mit einem Datum/Uhrzeit-Stempel, geschrieben bzw. an einem (binären) Ausgang zur weiteren anlagespezifischen Meldungsausgabe zur Verfügung gestellt. Bevorzugt werden alle drei Wege beschritten.

In Bezug auf die speicherprogrammierbare Steuerung wird die oben genannte Aufgabe erfindungsgemäß gelöst mit einer durch Softwaremodule integrierten oben dargestellten Vorrichtung. Das heißt, die oben genannten Module (Überwachungsmodul, Kontrollmodul, Sicherheitsmodul) sind jeweils als Softwaremodule bzw. Softwarebausteine realisiert und liegen im Betriebszustand der Steuer- und Regeleinheit in deren Speicher.

In Bezug auf die digitale Überwachungsanlage für eine kerntechnische Anlage wird die oben genannte Aufgabe erfindungsgemäß gelöst mit einer oben dargestellten speicherprogrammierten Steuerung.

In Bezug auf die kerntechnische Anlage wird die oben genannte Aufgabe erfindungsgemäß gelöst mit einer derartigen digitalen Überwachungsanlage.

Die Vorteile der Erfindung liegen insbesondere darin, dass durch die Überwachung des Betriebszustandes, des Hardwareausbauzustandes und des Programmzustandes der Steuer- und Regeleinheit eine unentdeckte Manipulation weitestgehend verhindert und zuverlässig gemeldet werden, so dass Maßnahmen zur Vermeidung von Schäden der Anlage unmittelbar und zielgerichtet eingeleitet werden können. Die Verwendung von speicherprogrammierten Steuerungen wird auf diese Weise in vernetzten, sicherheitskritischen Umgebungen erst ermöglicht. Durch die gegenseitige Überwachung von Überwachungsmodul und Kontrollmodul wird erreicht, dass der Manipulationen nicht durch Ausschaltung der Überwachung möglich werden.

Ein Ausführungsbeispiel der Erfindung wird anhand einer Zeichnung näher erläutert. Darin zeigen in stark schematisierter Darstellung:
Fig. 1 eine kerntechnische Anlage mit einer digitalen Überwachungseinheit mit einer Steuer- und Regeleinheit mit einer integrierten Vorrichtung mit einem Überwachungsmodul, Sicherheitsmodul und Kontrollmodul in einer bevorzugten Ausführungsform,
Fig. 2 ein Ablaufdiagramm der Funktionalität des Sicherheitsmoduls der Vorrichtung gemäß Fig. 1,
Fig. 3 ein Ablaufdiagramm der Funktionalität des Überwachungsmoduls der Vorrichtung gemäß Fig. 1, und
Fig. 4 ein Ablaufdiagramm der Funktionalität des Kontrollmoduls der Vorrichtung gemäß Fig. 1.

Gleiche Teile sind in allen Figuren mit denselben Bezugszeichen versehen.

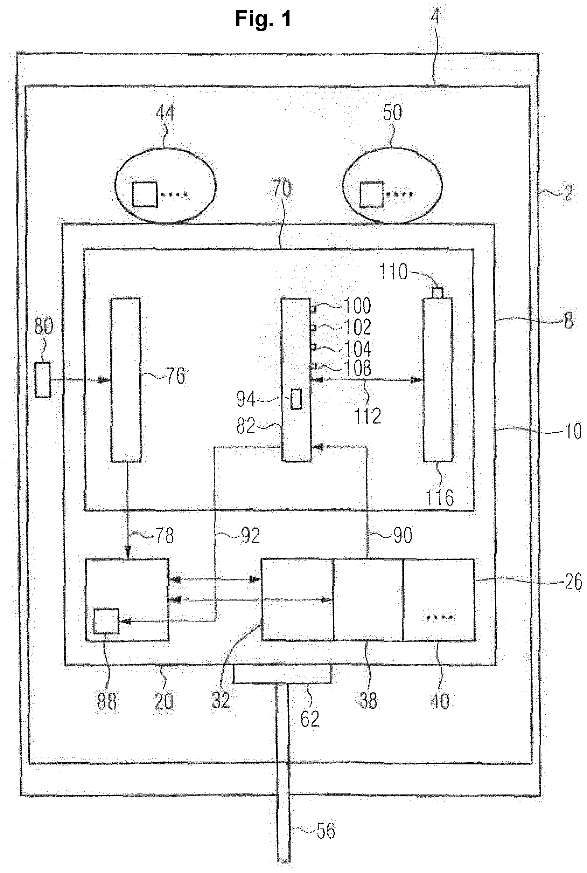

Eine in der Fig. 1 dargestellte kerntechnische Anlage 2 umfasst eine digitale Überwachungsanlage 4 mit Steuer- und Regeleinheit 8, die als modulare speicherprogrammierbare Steuerung (SPS) 10 ausgeführt ist. Dabei kann es sich beispielsweise um eine SIMATIC S7-300 oder S7-400 der Firma Siemens handeln. Diese umfasst eine CPU 20 sowie einen Speicher 26, welcher mehrere Speicherbereiche umfasst. In einem Programmspeicherbereich 32 ist das oder sind die Programme abgelegt, die während des Betriebes der SPS 10 ausgeführt werden. Zusätzlich dazu sind Prüfsummen des Codes und dessen Längen abgelegt, diese werden von der CPU 20 bei der Übertragung der Programme auf die CPU berechnet und bei Änderungen umgehend aktualisiert. Gleichermaßen werden Exklusiv-Oder-Verknüpfungen über diese Prüfsummen berechnet, im Systemdatenspeicher 38 abgelegt und bei Änderungen aktualisiert. Es kann auch vorgesehen sein, dass diese von dem Programmcode abgeleiteten Größen in einem eigenen Speicherbereich abgelegt werden.

Im Systemdatenspeicherbereich 38 werden zudem von der CPU 20 Konfigurationsdaten abgelegt, insbesondere die Konfigurationsdaten der Hardware. Damit in einer modular aufgebauten SPS 10 wie im vorliegenden Fall eine Baugruppe lauffähig werden kann, muss diese in der Hardware-Konfiguration parametriert werden und anschließend auf die CPU 20 hochgeladen werden. In der Hardware-Konfiguration werden alle Einstellungen wie Baugruppenadresse, Diagnoseeinstellungen, Messbereichseinstellungen u.a. der jeweiligen Baugruppe parametriert. Im Falle eines Baugruppentausches sind dann keine weiteren Einstellungen mehr nötig. Der Speicher 26 umfasst noch darüber hinaus noch weitere Speicherbereiche 40.

Die SPS 10 ist eingangsseitig mit Sensorgruppen 44, welche eine Anzahl von Sensoren umfassen und ausgangsseitig mit Aktorbaugruppen 50 verbunden, welche ihrerseits eine Anzahl von Aktoren umfassen. Eine Datenleitung 56 führt von außen in die kerntechnische Anlage hinein und verbindet über eine Schnittstelle 62 die SPS 10 mit einem Local Area Network (LAN) oder auch dem Internet. Aufgrund dieser Anbindung besteht die Möglichkeit, dass potentielle Angreifer versuchen, in die CPU 20 einen Virus einzuschleusen oder andere Arten von Schadsoftware zu installieren, um entweder Informationen über die in der CPU 20 abgelegten Daten zu erhalten (Betriebsspionage) oder um die Funktionalität der SPS 10 zu verändern, zu behindern oder zu zerstören. Ein derartiger erfolgreicher Angriff kann zu großen Personenschäden und auch wirtschaftlichen Schäden führen, wenn die SPS 10 mit der Steuerung sicherheitskritischer Vorgänge befasst ist.

Um diese Schäden zu verhindern und Angriffe und damit unbefugte Manipulationen des Betriebszustandes, des Hardwareausbauzustandes und des Programmzustandes, der SPS 10 zuverlässig und schnell erkennen zu können, ist erfindungsgemäß eine Vorrichtung 70 vorgesehen, welche im vorliegenden Fall in die SPS 10 integriert ist. Die Vorrichtung 70 umfasst drei Module 76, 82, 116, die im Folgenden beschrieben werden. Diese Module sind als Softwarebausteine realisiert und im Programmspeicherbereich abgelegt.

Ein Sicherheitsmodul 76 hat, dargestellt durch einen Pfeil 78, Zugriff auf die Sicherheitsstufe der CPU 20. Es ist dazu ausgelegt, die Sicherheitsstufe zwischen "Lesen und Schreiben", "nur Lesen" und "Schreib- und Leseschutz" oder umgekehrt umzuschalten. Diese Funktionalität ist mit einem Schlüsselschalter 80 gekoppelt, welcher in einem Schaltschrank (nicht dargestellt) eingebaut ist. Das heißt, in einer ersten Stellung des Schlüsselschalters aktiviert das Sicherheitsmodul 76 die Sicherheitsstufe "Lesen und Schreiben", und in einer zweiten Stellung des Schlüsselschalters aktiviert das Sicherheitsmodul 76 die Sicherheitsstufe "nur Lesen" oder alternativ den "Schreib- und Leseschutz". Im laufenden Betrieb ist diese zweite Stellung die Normalstellung, so dass von nicht autorisierten Personen keine Programmänderungen oder sonstige Änderungen im Speicher 26 durchgeführt werden können. Nur wenn der Schlüsselschalter in der ersten Stellung steht, sind Änderungen möglich. Der Angreifer müsste somit entweder Zugriff auf den Schlüsselschalter erhalten, also sich Zugang zu der Anlage verschaffen, was durch gängige Sicherheitsmaßnahmen weitestgehend verhindert werden kann. Gegebenenfalls könnte er auch, wenn der Schüsselschalter in der ersten Stellung steht, durch Einschleusung von Schadsoftware zu löschen oder dann auch programmtechnisch direkt die Sicherheitsstufe in der CPU verändern.

Um das Einschleusen von Schadsoftware in jeglicher Form bzw. nichtautorisierte Änderungen des Betriebszustandes, des Hardwareausbauzustandes und des Programmzustandes der SPS 10 zuverlässig zu entdecken, ist ein Überwachungsmodul 82 vorgesehen. Wie durch einen Pfeil 90 angedeutet ist, überwacht das Überwachungsmodul 82 Änderungen im Programmspeicherbereich des Speichers 32. Dies geschieht auf folgende Art: Die CPU 20 generiert aus dem im Programmspeicherbereich 32 abgelegten Programmcode je Baustein Prüfsummen und Programmlängen. Durch Exklusiv-Oder-Verknüpfungen über diese einzelnen Prüfsummen und Programmlängen wird eine Gesamtprüfsumme (32 Bit Zahl) gebildet und im Systemdatenspeicher 38 abgelegt. Die Ergebnisse (die Gesamtprüfsumme) dieser Verknüpfungen werden auf Änderungen überwacht. Dazu wird in vorgegebenen Zeitintervallen ein Alt-/Neuwertvergleich durchgeführt.

Wie durch einen Pfeil 90 symbolisiert wird, überwacht das Überwachungsmodul 82 auch den Systemdatenspeicherbereich 38 auf Änderungen. Dies geschieht wieder über die Überprüfung von Änderungen der von der CPU 20 generierten und bereitgestellten Exklusiv-Oder-Verknüpfungen über die Längen und Prüfsummen der Systemdaten. Das Überwachungsmodul 82 überwacht zudem Änderungen der Sicherheitsstufe der CPU 20, die ebenfalls im Systemdatenspeicher abgelegt ist.

Bei Änderungen der überwachten Ergebnisse generiert das Überwachungsmodul 82 Meldungen auf drei verschiedene Arten. Zum einen werden die Meldung in den Diagnosepuffer 88 der SPS 10 geschrieben. Dieser ist ein in der CPU 20 als Ringpuffer ausgeführter integrierter Speicherbereich, der bis zu 500 Diagnoseeinträge aufnehmen kann. Auch nach "Urlöschen" (Urlöschen ist eine Funktion, bei der der komplette Speicher der CPU mit Ausnahme des Diagnosepuffers 88 gelöscht wird, d.h. eine urgelöschte CPU arbeitet nicht (mehr)) oder gleichzeitigem Batterie- und Netzausfall ist dieser Speicher noch auslesbar. Durch das Schreiben der Meldung in den Diagnosepuffer 88 wird somit sichergestellt, dass die Meldung auch nach Stromausfällen nicht verloren geht. Der Inhalt des Diagnosepuffers kann zum einen über die Programmiersoftware STEP7/PCS7 ausgelesen und angezeigt werden. Zum anderen können bestimmte HMI Geräte/Softwaresysteme wie z.B. WinCC oder PCS7 OS diese Diagnosepuffereinträge ebenfalls in Klartext mit Datum/Uhrzeitstempel anzeigen.

Das Überwachungsmodul 82 schreibt eine Meldung auch in einem im Überwachungsmodul 82 realisierten, als Ringpuffer ausgeführten Überwachungspuffer 94, welcher im vorliegenden Fall 50 Einträge aufnehmen kann. Jeder Eintrag besteht aus einem Datum/Uhrzeitstempel und einem Bit pro aufgetretene Änderung. Der Überwachungspuffer 94 kann mittels STEP7/PCS7 ausgelesen und ausgewertet werden.

Die Meldung wird weiterhin jeweils an einem binären Ausgang 100, 102, 104 am Überwachungsmodul bereitgestellt bzw. angezeigt und wird damit zur Weiterverarbeitung zur Verfügung gestellt. Nach Alarmierung kann der Bediener bei Bedarf über Diagnosepuffer oder Überwachungspuffer tiefer gehende Informationen auslesen. Jeder der drei oben beschriebenen Überwachungen (Programmcode, Systemdaten, Sicherheitsstufe) ist jeweils ein eigener binärer Ausgang 100, 102, 104 zugeordnet, so dass das Setzen eines Bits genügt, um eine Meldung zu machen. Meldungen bei Änderungen des Programmcodes werden an dem binären Ausgang 100, Meldungen bei Änderungen der Systemdaten an dem binären Ausgang 102 und Meldungen bei Änderungen der Sicherheitsstufe werden an dem binären Ausgang 104 durch jeweils Setzen eines Bits gemacht.

Durch das beschriebene Überwachungsmodul 82 können aufgrund der generierten Meldungen Versuche erkannt werden, Veränderungen an den Systemdaten und/oder dem Programmcode durchzuführen, was beispielsweise die Auswirkungen einer Virusattacke sein können, mit der die Funktionalität der SPS 10 beeinträchtigt werden soll. Die Erzeugung der Meldungen könnte aber dadurch verhindert werden, dass der Angreifer das Überwachungsmodul 82 teilweise oder vollständig löscht oder deaktiviert, bevor das Überwachungsmodul 82 das Eindringen bemerkt und eine Meldung generieren kann. Um derartige Szenarien zu verhindern, ist ein Kontrollmodul 116 vorgesehen. Wie durch einen Doppelpfeil 112 dargestellt ist, überwachen sich das Überwachungsmodul 82 und das Kontrollmodul 116 gegenseitig. Dies geschieht vorliegend derart, dass jeweils die Abarbeitung der Programmanweisungen überwacht wird. Dazu wird jeweils überprüft, ob in einem vorgegeben Zeitintervall, hier 1 Sekunde (üblicherweise laufen leittechnische Programme in Zeitscheiben von 10 bis 100 Millisekunden), die Abarbeitung der Anweisungen des Programmcodes fortgesetzt wurde. Entdeckt eines der beiden Module 82, 106, dass bei dem jeweils anderen Modul 82, 106 die Bearbeitung nicht fortgesetzt wird, generiert es eine entsprechende Meldung, so dass auf einen möglichen Angriff reagiert werden kann.

Das Kontrollmodul 116 zeigt die fehlerhafte oder fehlende Abarbeitung des Überwachungsmoduls 82 an einem binären Ausgang 110 an. Die fehlerhafte oder fehlende Abarbeitung des Überwachungsmoduls 82 wird, wie oben im Zusammenhang mit den Überwachungen des Speichers 26 beschrieben, jeweils mit einem Datum/Uhrzeitstempel in den Diagnosepuffer 88 und den Überwachungspuffer 94 geschrieben sowie an dem binären Ausgang 110 zur weiteren anlagespezifischen Meldungsausgabe zur Verfügung gestellt.

Dieser Mechanismus ist äußerst zuverlässig, da ein Angreifer zunächst überhaupt von außen Kenntnis von dem Vorhandensein von zwei sich gegenseitig kontrollierenden bzw. überwachenden Modulen 82, 116 erlangen müsste. Zudem wird es ihm nicht möglich sein, beide Module 82 und 116 gleichzeitig zu löschen, so dass zumindest eines der beiden Module 82 oder 116 eine Meldung generiert und der Angriff dadurch erkennbar wird. Aber auch ohne Angriff können das Ausfallen oder Funktionsstörungen eines der beiden Module 82, 116 entdeckt werden.

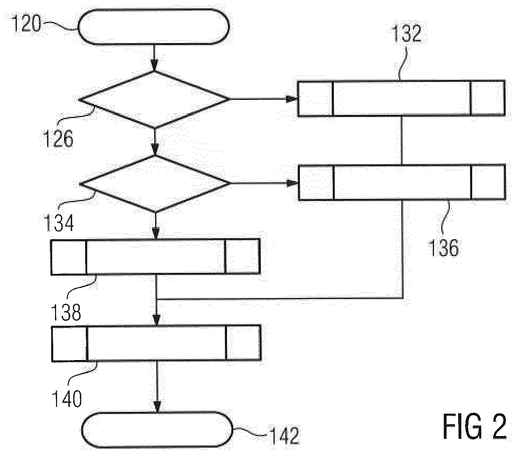

Ein Ablaufdiagramm der im Betriebszustand des Sicherheitsmoduls 76 auftretenden Verfahrensschritte ist in Fig. 2 dargestellt. Das im Sicherheitsmodul 76 softwaremäßig implementierte Verfahren beginnt bei Start 120. In einer Entscheidung 126 wird überprüft, ob der Schlüsselschalter 80 ein gültiges Signal gibt, welches den Schreib-/Lesezugriff ermöglicht, und ob gleichzeitig der Status dieses Signals gültig ist oder eine Simulation vorliegt. Sind alle diese Bedingungen erfüllt, verzweigt das Verfahren zu Block 132, in dem der Sicherheitslevel der CPU 20 auf Schreib-/Lesezugriff geschaltet wird, was einer Sicherheitsstufe 1 entspricht.

Andernfalls verzweigt das Verfahren zu einer Entscheidung 134, in der überprüft wird, ob ohne Passwortlegitimierung ein Schreib- und Lesezugriff verhindert werden soll. Trifft dies zu, verzweigt das Verfahren zu Block 136, in dem der Sicherheitslevel bzw. die Sicherheitsstufe der CPU 20 auf Schreib-/Lesezugriff ohne Passwortlegitimierung geschaltet wird. In Block 138 wird, wenn die obigen beiden Entscheidungen 126, 134 negativ ausfielen, der Sicherheitslevel auf Schreibschutz mit Passwort-Legitimierung geschaltet, was einer Sicherheitsstufe 2 entspricht. In Block 140 wird der aktuelle Sicherheitslevel ausgelesen und angezeigt. Das Verfahren wird bei Ende 142 beendet.

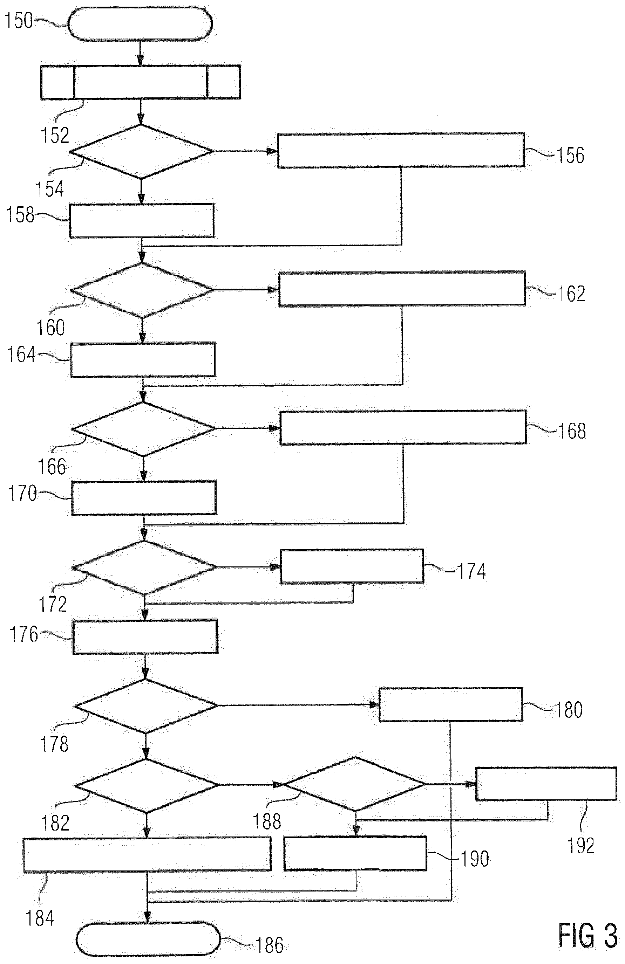

Ein im Überwachungsmodul 82 softwaremäßig implementiertes Verfahren ist mittels eines Ablaufdiagramms in Fig. 3 dargestellt und beginnt bei Start 150. In Block 152 werden die Prüfsummen, hier Quersummen, für die Hardware-Konfiguration HWKonfig und den Programmcode sowie der Sicherheitslevel ausgelesen. In der Entscheidung 154 wird mittels eines Altwert-/Neuwertvergleiches überprüft, ob der Wert der Prüfsumme der HWKonfig mit dem Wert aus der letzten Abfrage übereinstimmt. Ist dies nicht der Fall, verzweigt das Verfahren zu Block 145. Dort wird ein Meldungseintrag "HWKonfigänderung" in den Überwachungspuffer 94 und in den Diagnosepuffer 88, jeweils mit Datum-/Uhrzeitstempel eingetragen bzw. geschrieben und der binäre Ausgang 102 wird für die anlagenspezifische Weiterverarbeitung gesetzt, d.h. es wird das Bit den Wert gesetzt, der einer Meldung entspricht (z.B. 1 für Meldung, 0 für keine Meldung). Falls keine Änderung der Quersumme durch den Altwert/Neuwertvergleich festgestellt wurde, wird in Block 158 der Ausgang 102 zurückgesetzt wodurch sichergestellt wird, dass nicht fälschlicherweise eine Meldung angezeigt wird.

In einer Entscheidung 160 wird überprüft, ob sich der Wert der ausgelesenen Quersumme des Programmcodes gegenüber seinem vorherigen Wert aus der letzten Abfrage verändert hat. Ist dies geschehen, verzweigt das Verfahren zu Block 162. Dort wird ein Meldungseintrag "Programmänderung" in den Überwachungspuffer 94 und den Diagnosepuffer 88 geschrieben, inklusive einem Datum-/Zeitstempel, und der Ausgang 100 wird gesetzt. Andernfalls wird in Block 164 der Ausgang 100 zurückgesetzt.

In einer Entscheidung 166 wird überprüft, ob sich die Sicherheitsstufe der CPU 20 seit der letzten Abfrage geändert hat. Ist dies der Fall, wird in Block 168 ein Meldungseintrag "Änderung der Sicherheitsstufe" zusammen mit einem Zeitstempel in den Überwachungspuffer 94 und den Diagnosepuffer 88 geschrieben. Weiterhin wird der Ausgang 104 gesetzt. Andernfalls wird in Block 170 dieser Ausgang zurückgesetzt.

Es wird in einer Entscheidung 172 getestet, ob der Aufruf der beschriebenen Verfahrensschritte älter als 1 Sekunde ist. Ist dies der Fall, wird in Block ein Parametrierfehler ausgegeben (Die drei beschriebenen Module 76, 82, 116 werden zusammen mit weiteren Modulen in einer Bibliothek für eine Anwendung zur Verfügung gestellt. Der Anwender kann durch Parametrierung der Module bei der Programmierung bzw. bei der Inbetriebnahme unterschiedliche Verhalten auswählen/einstellen. Wenn der Anwender eine unzulässiges Verhalten parametriert/auswählt bekommt er eine Parametrierfehleranzeige und kann seine Parametrierung korrigiere). Andernfalls verzweigt das Verfahren zu Block 176, in dem der Parametrierfehler zurückgesetzt wird.

Die gegenseitige Überwachung von Überwachungsmodul 82 und Kontrollmodul 116 wird im vorliegenden Ausführungsbeispiel dadurch erreicht, dass jedes Modul jeweils einen Zähler aufweist, den es selber hochzählt sowie einen Zähler, der von dem jeweils anderen Modul hochgezählt wird. Wenn beide Module 82 und 116 ordnungsgemäß funktionieren, haben die Zähler jeweils die gleichen Werte. Fällt ein Modul aus, so wird der von ihm hoch gezählte Zähler im anderen Modul nicht mehr erhöht, sodass der Ausfall des Moduls erkannt werden kann.

Das Verfahren geht nun weiter zu einer Entscheidung 178, in der der Wert eines von dem Überwachungsmodul 82 hochgezählten Überwachungszählers mit dem Wert eines vom Kontrollmodul 116 hochgezählten Kontrollzählers verglichen wird. Stimmen diese Werte überein, wird in Block 180 der Überwachungszähler erhöht. Stimmen die beiden Werte nicht überein, wird in einer Entscheidung 182 getestet, ob die letzte Zählererhöhung des Kontrollzählers älter als 1 s ist und noch kein Eintrag in Überwachungspuffer 94 und den Diagnosepuffer 88 erfolgt ist. Ist dies der Fall, zeigt dies, dass das Kontrollmodul 106 nicht ordnungsgemäß arbeitet. Daher wird dann in Block 184 ein Meldungseintrag "Löschüberwachungsfehler" bzw. "Kontrollmodulfehler" in den Überwachungspuffer 94 und Diagnosepuffer 88 jeweils mit Zeitstempel, eingetragen und an einem binären Ausgang 108, an dem Fehler des Kontrollmoduls 116 angezeigt werden, ein Bit gesetzt. Das Verfahren endet dann bei Ende 186. Andernfalls wird in einer Entscheidung 188 überprüft, ob im Diagnosepuffer 88 der CPU schon der Eintrag "Überwachungsmodul arbeitet wieder" vorliegt, welcher in Block 184 eingetragen wurde. Ist dies der Fall, wird in Block 190 der Ausgang 108 zurückgesetzt. Ansonsten wird in Block 192 in den Überwachungspuffer 94 und den Diagnosepuffer mit Zeitstempel ein Meldungseintrag "Kontrollmodul arbeitet ok" bzw. "Löschüberwachung ok" vorgenommen.

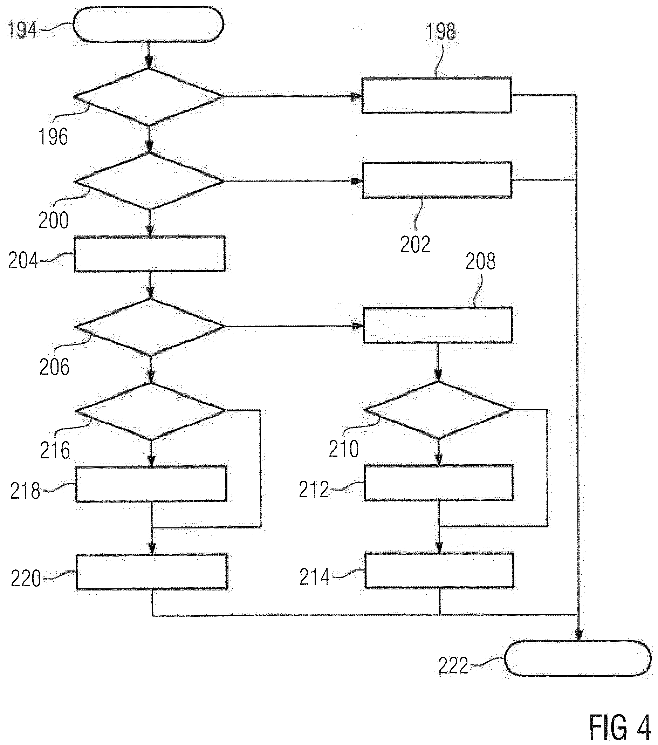

Ein in dem Kontrollmodul 116 softwaremäßig realisiertes Verfahren ist als Ablaufdiagramm in Fig. 4 dargestellt und fängt bei Start 194 an. In einer Entscheidung 196 wird überprüft, ob die Verbindung zum Überwachungsmodul 82 ordnungsgemäß bzw. richtig ist. Im vorliegenden Ausführungsbeispiel muss nämlich der Anwender bei der Projektierung/Programmierung eine Verbindung/Linie in einem CFC Editor (Continuous Function Chart) mit der Maus zwischen den beiden Modulen durch Anklicken herstellen. Durch diese Verbindung kann das Kontrollmodul 116 in den Instanzdatenbaustein des Überwachungsmoduls 82 lesen und schreiben. Das Kontrollmodul selbst hat keinen eigenen Datenspeicher. Falls dies nicht der Fall ist, wird in einem Block 198 ein Parametrierfehler ausgegeben. Andernfalls wird in einer Entscheidung 200 überprüft, ob der letzte Aufruf dieser Funktion älter als 1 s her ist. Falls nicht, wird in Block 202 ein Parametrierfehler ausgegeben. Falls ja geht das Verfahren weiter zu Block 204, in dem der Parametrierfehler zurückgesetzt wird.

In dem Kontrollmodul 116 wird, wenn der Zähler, den das Überwachungsmodul 82 hochzählt, größer als der Zähler des Kontrollmoduls 116 ist, der Kontrollzähler hochgezählt. In einer Entscheidung 206 werden der Überwachungszähler und der Kontrollzähler miteinander verglichen. Ist der Überwachungszähler größer als der Kontrollzähler, wird der Kontrollzähler in Block 208 erhöht. Daraufhin wird in einer Entscheidung 210 überprüft, ob ein Eintrag "Überwachungsmodul arbeitet wieder" im Diagnosepuffer 88 eingetragen ist. Falls nicht, wird dies in Block 212 nachgeholt. In Block 214 wird dann der entsprechende binäre Ausgang zurückgesetzt.

Wenn eine Übereinstimmung vorliegt, wird in einer Entscheidung 216 überprüft, ob die letzte Zählererhöhung des Überwachungszählers älter als 1 s ist und noch kein Eintrag in den Diagnosepuffer 88 erfolgt ist. Wenn noch kein Eintrag erfolgt ist, wird in Block 218 ein Eintrag "Überwachungsmodul arbeitet nicht mehr" in dem Diagnosepuffer 88 vorgenommen. In Block 220 wird dann der Ausgang 110 gesetzt.

War die letzte Zählererhöhung älter als 1 s und kein Eintrag lag vor, verzweigt das Verfahren von der Entscheidung 216 direkt zu Block 220. Das Verfahren wird bei Ende 222 beendet.

Bei allen drei Modulen kann auch die Reihenfolge von Verfahrensschritten in anderer Reihenfolge oder parallel ablaufen, sofern die geschilderte Funktionalität gewahrt bleibt. Die Abfolge der jeweils zwischen Start und Ende geschilderten Verfahrensschritte wird in regelmäßigen Zeitintervallen wiederholt. Jeweils zwischen Start und Ende zählt das jeweilige Modul seinen von ihm aktualisierten Zähler um Eins hoch.

### Bezugszeichenliste

- 2: kerntechnische Anlage
- 4: digitale Überwachungsanlage
- 8: Steuer- und Regeleinheit
- 10: speicherprogrammierbare Steuerung
- 20: CPU
- 26: Speicher
- 32: Programmspeicherbereich
- 38: Systemdatenspeicherbereich
- 40: weitere Speicherbereiche
- 44: Sensorbaugruppen
- 50: Aktorbaugruppen
- 56: Datenleitung
- 62: Schnittstelle
- 70: Vorrichtung
- 76: Sicherheitsmodul
- 78: Pfeil
- 80: Schlüsselschalter
- 82: Überwachungsmodul
- 84: Pfeil
- 88: Diagnosepuffer
- 90: Pfeil
- 92: Pfeil
- 94: Überwachungsdiagnosepuffer
- 100: binärer Ausgang
- 102: binärer Ausgang
- 104: binärer Ausgang
- 108: binärer Ausgang
- 110: binärer Ausgang
- 112: Doppelpfeil
- 116: Kontrollmodul
- 120: Start
- 126: Entscheidung
- 132: Block
- 134: Entscheidung
- 136: Block
- 138: Block
- 140: Block
- 142: Ende
- 150: Start
- 152: Block
- 154: Entscheidung
- 156: Block
- 158: Block
- 160: Entscheidung
- 162: Entscheidung
- 164: Block
- 166: Entscheidung
- 168: Block
- 170: Block
- 172: Entscheidung
- 174: Block
- 176: Block
- 178: Entscheidung
- 180: Block
- 182: Entscheidung
- 184: Block
- 186: Ende
- 188: Entscheidung
- 190: Block
- 192: Block
- 194: Start
- 196: Entscheidung
- 198: Block
- 200: Entscheidung
- 202: Block
- 204: Block
- 206: Entscheidung
- 208: Block
- 210: Entscheidung
- 212: Block
- 214: Block
- 216: Entscheidung
- 218: Block
- 220: Block
- 222: Ende

## Patentansprüche

1. Vorrichtung (70) zur Erkennung von unbefugten Manipulationen des Systemzustandes einer Steuer- und Regeleinheit (8), wobei
• ein Überwachungsmodul (82) vorgesehen ist, welches den Betriebszustand und/oder den Hardwareausbauzustand und/oder den Programmzustand der Steuer- und Regeleinheit (8) überwacht und bei Änderungen dieses Zustandes eine Meldung generiert,
• ein Kontrollmodul (116) vorgesehen ist, welches den Betrieb des Überwachungsmoduls (82) überwacht, und
• das Überwachungsmodul (82) den Betrieb des Kontrollmoduls (116) überwacht,
**dadurch gekennzeichnet, dass**
die Steuer- und Regeleinheit (8) eine speicherprogrammierbare Steuerung (10) aufweist und das Überwachungsmodul (82) und das Kontrollmodul (116) Softwarebausteine der speicherprogrammierbaren Steuerung (10) sind, die gegenseitig überprüfen, ob das jeweils andere Modul innerhalb eines vorgegebenen Zeitintervalls Programmanweisungen planmäßig abarbeitet.

2. Vorrichtung (70) nach Anspruch 1, wobei die Steuer- und Regeleinheit (8) wenigstens einen schreibbaren Speicher (26) mit darin abgelegten Daten aufweist, und wobei das Überwachungsmodul (82) bei Änderungen der im Speicher (26) abgelegten Daten eine Meldung generiert.

3. Vorrichtung (70) nach Anspruch 2, wobei die Daten den Programmcode und/oder daraus erzeugte Programmgrößen umfassen.

4. Vorrichtung (70) nach Anspruch 2 oder 3, wobei die Daten die Systemdaten, insbesondere die Hardwarekonfiguration, und/oder daraus erzeugte Systemgrößen umfassen.

5. Vorrichtung (70) nach einem der Ansprüche 1 bis 4, wobei das Überwachungsmodul (82) die Stellung eines Betriebsartenschalters der CPU der Steuer- und Regeleinheit (8) überwacht.

6. Vorrichtung (70) nach einem der Ansprüche 1 bis 5, wobei das Überwachungsmodul (82) Änderungen einer Sicherheitsstufe der Steuer- und Regeleinheit (8) überwacht.

7. Vorrichtung (70) nach einem der Ansprüche 1 bis 6, wobei die Meldung in einen Speicher, insbesondere einen Diagnosepuffer (88) der CPU der Steuer- und Regeleinheit und/oder einen Puffer (94) des Überwachungsmoduls geschrieben wird.

8. Vorrichtung (70) nach einem der Ansprüche 1 bis 7, wobei die Meldung an einem Ausgang (100, 102, 104, 108) der Vorrichtung (70), insbesondere des Überwachungsmoduls (82), bereitgestellt wird.

9. Vorrichtung (70) nach einem der Ansprüche 1 bis 8, wobei ein Sicherheitsmodul (76) vorgesehen ist, welches eine Sicherheitsstufe der Steuer- und Regeleinheit (8) bedarfsweise, insbesondere bei Betätigung eines Schlüsselschalters (80), umschaltet.

10. Kerntechnische Anlage (2) mit einer digitalen Überwachungsanlage nach einem der Ansprüche 1 bis 9.

## Claims

1. Device (70) for detecting unauthorised tampering with the system state of a control unit (8),
• a monitoring module (82) being provided which monitors the operating state and/or the hardware expansion state and/or the program state of the control unit (8) and generates a message in the event of changes to this state,
• a supervision module (116) being provided which monitors the operation of the monitoring module (82), and
• the monitoring module (82) monitoring the operation of the supervision module (116),
**characterised in that**
the control unit (8) comprises a programmable logic controller (10) and the monitoring module (82) and the supervision module (116) are software components of the programmable logic controller (10) that reciprocally check whether the respective other module is processing program statements as planned within a predetermined time period.

2. Device (70) according to claim 1, wherein the control unit (8) comprises at least one writable memory (26) containing stored data, and wherein the monitoring module (82) generates a message in the event of changes to the data stored in the memory (26).

3. Device (70) according to claim 2, wherein the data include the program code and/or program variables generated therefrom.

4. Device (70) according to either claim 2 or claim 3, wherein the data includes the system data, in particular the hardware configuration, and/or system variables generated therefrom.

5. Device (70) according to any of claims 1 to 4, wherein the monitoring module (82) monitors the position of an operating mode switch of the CPU of the control unit (8).

6. Device (70) according to any of claims 1 to 5, wherein the monitoring module (82) monitors changes to a security level of the control unit (8).

7. Device (70) according to any of claims 1 to 6, wherein the message is written to a memory, in particular a diagnostic buffer (88) of the CPU of the control unit and/or a buffer (94) of the monitoring module.

8. Device (70) according to any of claims 1 to 7, wherein the message is provided at an output (100, 102, 104, 108) of the device (70), in particular of the monitoring module (82).

9. Device (70) according to any of claims 1 to 8, wherein a security module (76) is provided, which switches a security level of the control unit (8) as required, in particular upon actuation of a key-operated switch (80).

10. Nuclear plant (2) comprising a digital monitoring system according to any of claims 1 to 9.

## Revendications

1. Dispositif (70) destiné à l'identification de manipulations non autorisées de l'état du système d'une unité de commande et de régulation (8), dans lequel
• un module de surveillance (82) est prévu, lequel surveille l'état de fonctionnement et/ou l'état d'extension du matériel et/ou l'état des programmes de l'unité de commande et de régulation (8) et génère une notification en cas de modifications de cet état,
• un module de contrôle (116) est prévu, lequel surveille le fonctionnement du module de surveillance (82), et
• le module de surveillance (82) surveille le fonctionnement du module de contrôlé (116),
**caractérisé en ce que**
l'unité de commande et de régulation (8) présente une commande par programme enregistré (10) et le module de surveillance (82) ainsi que le module de contrôle (116) sont des composants logiciels de la commande par programme enregistré (10), lesquels vérifient mutuellement si l'autre module respectif exécute de façon programmée des instructions de programmes dans un intervalle de temps prédéterminé.

2. Dispositif (70) selon la revendication 1, dans lequel l'unité de commande et de régulation (8) présente au moins une mémoire en écriture (26) au sein de laquelle sont stockées des données, et dans lequel le module de surveillance (82) génère une notification en cas de modifications des données stockées dans la mémoire (26).

3. Dispositif (70) selon la revendication 2, dans lequel les données comprennent le code du programme etlou des valeurs de programme générées à partir de ces données.

4. Dispositif (70) selon la revendication 2 ou 3, dans lequel les données comprennent les données du système, en particulier la configuration du matériel et/ou des valeurs de système générées à partir de ces données.

5. Dispositif (70) selon l'une des revendications 1 à 4, dans lequel le module de surveillance (82) surveille la position d'un commutateur de modes de fonctionnement de l'unité centrale de traitement de l'unité de commande et de régulation (8).

6. Dispositif (70) selon l'une des revendications 1 à 5, dans lequel le module de surveillance (82) surveille des modifications d'un niveau de sécurité de l'unité de commande et de régulation (8).

7. Dispositif (70) selon l'une des revendications 1 à 6, dans lequel la notification est écrite dans une mémoire, en particulier dans un tampon de diagnostic (88) de l'unité centrale de traitement de l'unité de commande et de régulation et/ou dans un tampon (94) du module de surveillance.

8. Dispositif (70) selon l'une des revendications 1 à 7, dans lequel la notification est délivrée sur une sortie (100, 102, 104, 108) du dispositif (70), en particulier du module de surveillance (82).

9. Dispositif (70) selon l'une des revendications 1 à 8, dans lequel un module de sécurité (76) est prévu, lequel procède en cas de besoin à la commutation d'un niveau de sécurité de l'unité de commande et de régulation (8), en particulier en cas d'actionnement d'un commutateur à clé (80).

10. Installation nucléaire (2) avec une installation de surveillance numérique selon l'une des revendications 1 à 9.
